# EUROPEAN PATENT SPECIFICATION

(11) **EP 2 798 744 B1**
(45) Date of publication and mention of the grant of the patent: **16.01.2019**
(21) Application number: 11879005.4
(22) Date of filing: 28.12.2011
(51) Int. Cl.: H04B 1/034, B60K 37/06

(54) **LAWN CARE VEHICLE WITH MODULAR RIDE INFORMATION SYSTEM**
RASENPFLEGEFAHRZEUG MIT MODULAREM FAHRINFORMATIONSSYSTEM
VÉHICULE D'ENTRETIEN DU GAZON MUNI D'UN SYSTÈME D'INFORMATIONS DE PARCOURS MODULAIRE

(43) Date of publication of application: 05.11.2014
(73) Proprietor: Husqvarna AB, 561 82 Huskvarna (SE)
(72) Inventor: RHOADES, Lennie, D., Charlotte, North Carolina 28270 (US); BRINKMAN, Steven, C., Martinez, Georgia 30907 (US)
(74) Representative: Schröer, Gernot H.
(86) International application number: PCT/US2011/067492
(87) International publication number: WO 2013/100938

(56) References cited:
- EP-A1- 1 634 762
- WO-A1-2011/086745
- DE-A1- 10 120 465
- DE-A1- 10 308 897
- GB-A- 2 390 347
- US-A1- 2007 204 581
- US-A1- 2007 244 605
- US-A1- 2008 019 082
- US-A1- 2011 230 178
- US-B1- 7 185 478

## Description

### TECHNICAL FIELD

The invention relates to outdoor power equipment in accordance with the preamble of claim 1 in the form of a riding lawn care vehicle or hand-held power equipment device. Example embodiments generally relate to lawn care vehicles and, more particularly, relate to a riding lawn care vehicle having a detachable and modular information cluster management unit capable of collecting, storing and/or displaying ride information.

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, can be quite large. Riding lawn mowers can sometimes also be configured with various functional accessories (e.g., trailers, tillers and/or the like) in addition to grass cutting components. Riding lawn mowers provide the convenience of a riding vehicle as well as a typically larger cutting deck as compared to a walk-behind model.

Riding lawn mowers are typically capable of transiting over even and uneven terrain to execute yard maintenance activities of various types (e.g., lawn mowing, tilling, brush cutting, mulching, etc.). Regardless of the specific operating environment, riding lawn care vehicles are often engaged in activities that their riders may wish to track or monitor either for cost considerations or purely for the sake of interest. For example, vehicle owners may simply want to know how long it takes them to complete a certain task, or how many run hours a machine has accrued in order to perform certain regular maintenance activities. In a fleet management environment, other data may be worth tracking in order to efficiently operate the fleet. Because tracking such information would likely need to be performed manually, many operators simply make mental notes or don't track anything at all. Meanwhile, information that is tracked is often done so by paper recordation, or by manual entry of data into a computer.

Therefore, some purchasers of a riding lawn care vehicle may desire a more automated system for tracking certain information about the riding lawn care vehicle and/or may desire other advanced technology on their riding lawn mower. However, adding advanced technology to a riding lawn care vehicle may be costly and some consumers may not be willing or able to afford the additional cost, at least not all at once. Furthermore, professional users may want different features than the consumers and even consumers can vary widely in their desires for advanced technology and their willingness to pay more for it. As such, manufacturers often engineer and produce a variety of different types, brands, and models of riding lawn care vehicles to fit the different demands and budgets of the market.

DE 101 20 465 A1 discloses an apparatus for the display and/or operation of vehicle functions in a vehicle, comprising a module with a display and/or operating unit and a computer, wherein the computer is arranged for communication with several vehicle units, wherein the module forms an independent unit with an energy source, that can be operated in an adapter-like holder provided in a vehicle, and wherein the module is readily removable from the holder. In an embodiment, the module is configurable in a location-dependent manner for "multi-module operation". Thus, a module allocated to a driver can provide a different functionality from a module intended for operation from the back seat of a vehicle. The display unit of the module may comprise a touch screen. In an embodiment, the module is configured to communicate with a vehicle bus. It is preferred that the module assumes the functionality of a board computer. This is in particular of benefit, when the module is in communication with a vehicle bus and can thus record and process all important vehicle data. Advantageously, the module is configured for recording and storage of data relevant to diagnosis and service of the vehicle and for recalling these data in a removed state. In an embodiment, the module is planar and provided with contact elements on the back, which fit corresponding contact elements in the holder. This allows the module to be fit into the user surface of an instrument panel, for example. With regard to a bus system in a vehicle, it is not merely advantageous when a single holder for an apparatus comprising such a module is provided, but when several such holders are provided. With these, a module can either be deployed at different locations in a vehicle or multiple modules can be operated simultaneously to allow the regulation of vehicle functions from many places in a vehicle.

WO 2011/086745 A1 discloses a lawn mowing vehicle.

US 2007/0244605 A1 discloses ground treatment equipment having attached thereto a monitoring device. The monitoring device may be operative to provide information indicative of the current speed of the machine, whether the speed has deviated from a target speed and/or the minimum, maximum or average speed of the machine over a period of time. The monitoring device may also be operative for recording information in a memory unit.

### BRIEF SUMMARY OF SOME EXAMPLES

The invention is defined in claim 1.

Some example embodiments may provide a riding lawn care vehicle having an onboard ride information system that may display, record and/or report information related to the operation of the riding lawn care vehicle. In this regard, for example, a controller or other processing circuitry may be provided to monitor various operational aspects of the riding lawn care vehicle, and information regarding the operational aspects may be displayed, stored and, in some examples, also reported to facilitate the consumption of ride information by operators and/or managers. In an example embodiment, the controller and/or processing circuitry may be provided in a detachable unit that may detach from the riding lawn care vehicle and, in some embodiments, may have an adjustable position or orientation on the riding lawn care vehicle.

In one example embodiment, a riding lawn care vehicle is provided. The riding lawn care vehicle includes a docking station and a detachable information unit. The docking station includes a receiving cavity disposed at a portion of the riding lawn care vehicle. The receiving cavity includes an electrical contact in communication with one or more sensors (or other electrical devices) of a device network of the riding lawn care vehicle. The detachable information unit includes a user interface, a memory for storing data received via the device network, and processing circuitry in communication with the user interface and the memory. The processing circuitry is configured to control operation of the detachable information unit and generate information for operator viewing at the user interface. The detachable information unit is configured to detachably connect to the device network via operable coupling with the docking station.

A detachable information unit for communicating with outdoor power equipment is provided. The detachable information unit includes a housing, a user interface, a memory and processing circuitry. The housing is configured to provide engagement with a docking station of the outdoor power equipment. The docking station includes a receiving cavity disposed at a portion of the outdoor power equipment and including an electrical contact in communication with one or more devices of a device network of the outdoor power equipment. The user interface is supported at least in part by the housing. The memory stores data received via the device network. The processing circuitry is in communication with the user interface and the memory. The processing circuitry is configured to control operation of the detachable information unit and generates information for operator viewing at the user interface. The detachable information unit is configured to detachably connect to the device network via engagement with the docking station.

Some example embodiments may improve the ability of operators and/or fleet managers to monitor and/or record information regarding the operation of a riding lawn care vehicle.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a side view of a riding lawn care vehicle according to an example embodiment;
FIG. 1B illustrates a perspective view of the riding lawn care vehicle according to an example embodiment;
FIG. 2 illustrates a perspective view of one example of a detachable information unit capable of engagement with the riding lawn care vehicle according to an example embodiment;
FIG. 3 illustrates a perspective view of the riding lawn care vehicle having the detachable information unit attached to a portion thereof according to an example embodiment;
FIG. 4 illustrates a block diagram of various components of the detachable information unit according to an example embodiment;
FIG. 5A illustrates a block diagram of components of the detachable information unit (or ride information unit) of a riding lawn care vehicle according to an example embodiment;
FIG. 5B illustrates a diagram of a dashboard of a vehicle (e.g., a riding lawn care vehicle) including a relatively simple ride information unit of an example embodiment;
FIG. 5C illustrates a diagram of a dashboard of a vehicle (e.g., a riding lawn care vehicle) including a relatively complex ride information unit of an example embodiment;
FIG. 6A illustrates a block diagram of a method of manufacturing different models of riding lawn care vehicles according to an example embodiment;
FIG. 6B illustrates a method of matching ride information units with mower models according to an example embodiment;
FIG. 7A illustrates a block diagram of a cell phone being used in connection with an online communication network for employment of an example embodiment; and
FIG. 7B illustrates an example holder for the cell phone of FIG. 7A.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. Additionally, the term "lawn care" is meant to relate to any yard maintenance activity and need not specifically apply to activities directly tied to grass, turf or sod care. As used herein, operable coupling should be understood to relate to direct or indirect connection that, in either case, enables functional interconnection of components that are operably coupled to each other.

In an example embodiment, a riding lawn care vehicle is provided with an onboard ride information system that may display, record and/or report information related to the operation of the riding lawn care vehicle. The onboard ride information system may include a controller or other processing circuitry that may be provided to monitor various operational aspects of the riding lawn care vehicle. The controller and/or processing circuitry may cause information regarding the operational aspects to be displayed, stored and, in some examples, also reported to facilitate the consumption of ride information by operators and/or fleet managers. The ride information system may also receive inputs, run control algorithms and other software, and perform other actions.

In an example embodiment, the controller and/or processing circuitry may be provided in a detachable unit that may detach from the riding lawn care vehicle and, in some embodiments, may have an adjustable position or orientation on the riding lawn care vehicle. As such, for example, one or more sockets (or docking stations) may be provided to receive the detachable unit and engage the detachable unit to an onboard sensor network so that various operational parameters associated with the sensors of the sensor network may be monitored. Furthermore, the detachable unit may include swivel mounts or other adjustable mounting apparatuses to enable operators to adjust the position of the detachable unit to improve viewing. Removal of the detachable unit may facilitate extraction of data stored thereon for transfer to a network or other device (e.g., a computer). The removable nature of the detachable unit may also facilitate theft prevention and/or may enable replacement of the detachable unit with different (perhaps upgraded) models and/or accessories. In some embodiments, the removable nature of the detachable unit also allows for efficiencies in manufacturing and selling different models of lawn care vehicle by providing a plurality of different models of ride information units that are interchangeable with a plurality of different models of lawn care vehicles since they are configured to communicate with sensor networks installed in the lawn care vehicles.

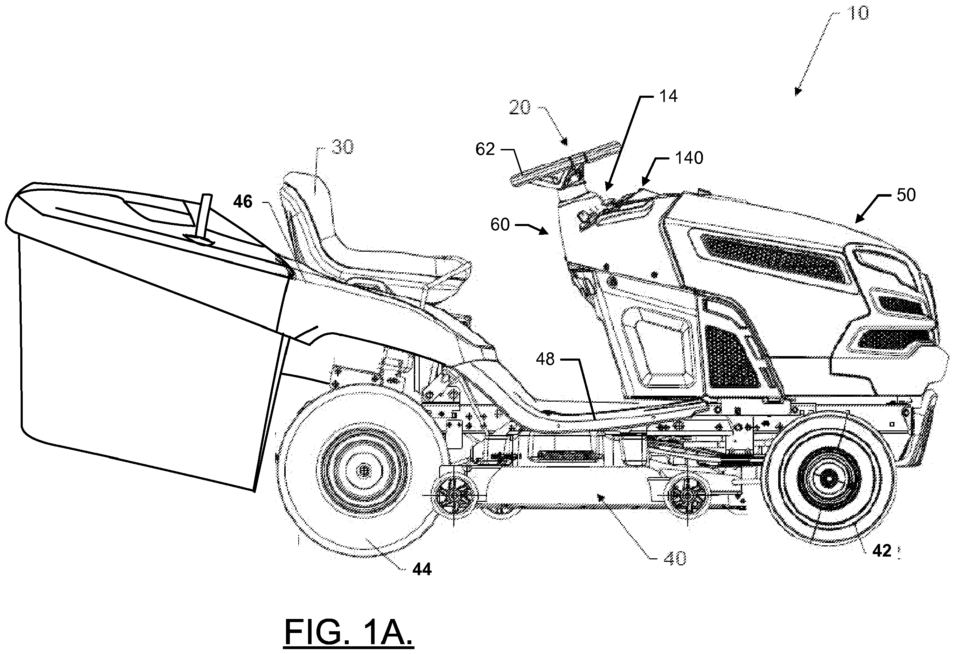

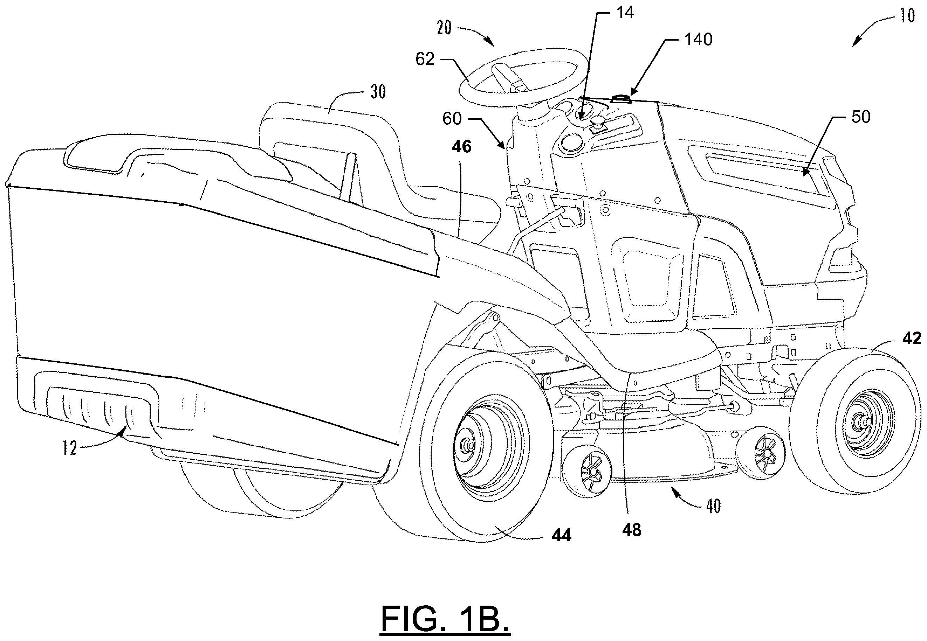

FIG. 1, which includes FIGS. 1A and 1B, illustrates an example of a riding lawn care vehicle 10 having a bagging attachment 12. However, it should be appreciated that example embodiments may be employed on numerous other riding lawn care vehicles that may not include a bagging attachment 12. The riding lawn care vehicle 10 may also include an information panel 14 displaying operational information regarding the riding lawn care vehicle 10. As shown and described herein, the riding lawn care vehicle 10 may be a riding lawn mower (e.g., a lawn tractor, front-mount riding lawn mower, zero-turn riding lawn mower, and/or the like). However, other example embodiments may be employed on riding lawn care vehicles that are configured or otherwise equipped to handle snow removal, brush cutting, tilling or other lawn care-related activities. Furthermore, other example embodiments of the invention may be employed in other outdoor power equipment, such as chainsaws, trimmers, walk-behind mowers, robotic mowers, and/or the like.

FIG. 1A illustrates a side view of the riding lawn care vehicle 10 and FIG. 1B illustrates a perspective view of the riding lawn care vehicle 10. The riding lawn care vehicle may include a steering assembly 20 (e.g., including a steering wheel, handle bars, or other steering apparatus) functionally connected to wheels of the riding lawn care vehicle 10 to which steering inputs are provided (e.g., the front and/or rear wheels in various different embodiments) to allow the operator to steer the riding lawn care vehicle 10. In some embodiments, the riding lawn care vehicle 10 may include seat 30 that may be disposed at a center, rear or front portion of the riding lawn care vehicle 10. The operator may sit on the seat 30, which may be disposed to the rear of the steering assembly 20 to provide input for steering of the riding lawn care vehicle 10 via the steering assembly 20.

The riding lawn care vehicle 10 may also include, or be configured to support attachment of, a cutting deck 40 having at least one cutting blade mounted therein. In some cases, a height of the at least one cutting blade may be adjustable by an operator of the riding lawn care vehicle 10. The cutting deck 40 may be a fixed or removable attachment in various different embodiments. Moreover, a location of the cutting deck 40 may vary in various alternative embodiments. For example, in some cases the cutting deck 40 may be positioned in front of the front wheels 42, behind the rear wheels 44, or in between the front and rear wheels 42 and 44 (as shown in FIG. 1) to enable the operator to cut grass using the at least one cutting blade when the at least one cutting blade is rotated below the cutting deck 40. In some embodiments, the front wheels 42 and/or the rear wheels 44 may have a shielding device positioned proximate thereto in order to prevent material picked up in the wheels from being ejected toward the operator. Fender 46 is an example of such a shielding device. When operating to cut grass, the grass clippings may be captured by a collection system (e.g., bagging attachment 12), mulched, or expelled from the cutting deck 40 via either a side discharge or a rear discharge.

The riding lawn care vehicle 10 may also include additional control related components such as one or more speed controllers, cutting height adjusters and/or the like. Some of the controllers, such as the speed controllers, may be provided in the form of foot pedals that may sit proximate to a footrest 48 (which may include a portion on both sides of the riding lawn care vehicle 10) to enable the operator to rest his or her feet thereon while seated in the seat 20.

In the pictured example embodiment of FIG. 1, an engine 50 of the riding lawn care vehicle 10 is disposed substantially forward of a seated operator. However, in other example embodiments, the engine 50 could be in different positions such as below or behind the operator. In some embodiments, the engine 50 may be operably coupled to one or more of the wheels of the riding lawn care vehicle 10 in order to provide drive power for the riding lawn care vehicle 10. In some embodiments, the engine 50 may be capable of powering two wheels, while in others, the engine 50 may power all four wheels of the riding lawn care vehicle 10. Moreover, in some cases, the engine 50 may manually or automatically shift between powering either two wheels or all four wheels of the riding lawn care vehicle 10. The engine 50 may be housed within a cover that forms an engine compartment to protect engine 50 components and improve the aesthetic appeal of the riding lawn care vehicle 10.

In an example embodiment, the engine compartment may be positioned proximate to and/or mate with portions of a steering assembly housing 60. The steering assembly housing 60 may house components of the steering assembly 20 to protect such components and improve the aesthetic appeal of the riding lawn care vehicle 10. In some embodiments, a steering wheel 62 of the steering assembly 20 may extend from the steering assembly housing 60 and a steering column (not shown) may extend from the steering wheel 62 down through the steering assembly housing 60 to components that translate inputs at the steering wheel 62 to the wheels to which steering inputs are provided.

In some embodiments, the steering assembly housing 60, the steering wheel 62 and/or the fender 46 may include gauges, displays and/or other user interface components. As such, for example, user interface components may be provided to indicate or display information to the operator regarding operational parameters related to the operation of the riding lawn care vehicle 10. The information may relate to any of various aspects including parameters related to cutting deck operation, engine operation, run time, work time, operator in-seat time, etc.

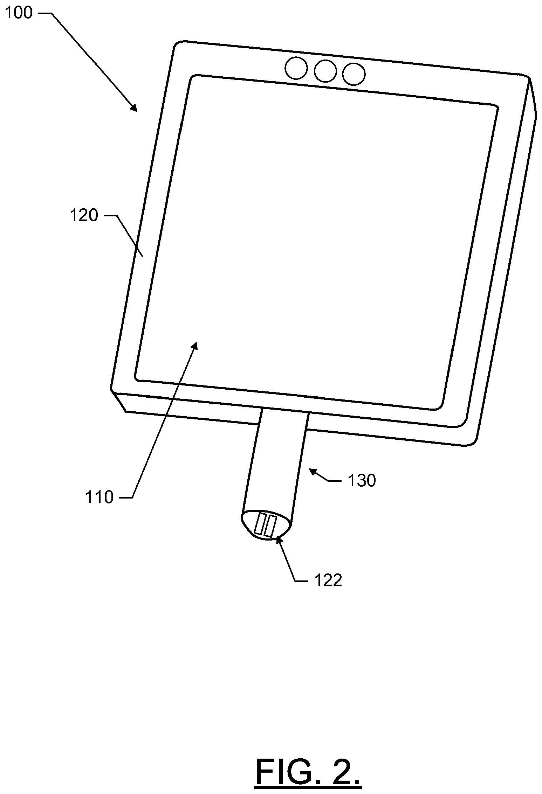

In an example embodiment, one or more these gauges displays and/or other user interface components may be disposed on a detachable information unit 100 that may be detachably coupled to the riding lawn care vehicle 10. However, in some examples, the detachable information unit 100 may include gauges, displays and/or other user interface components in addition to a basic set of such components that may be provided directly on the information panel 14 of the riding lawn care vehicle. The detachable information unit 100, an example of which is shown in FIG. 2, may include at least a display screen 110 and a housing 120 configured to house components of the display screen 110 along with processing circuitry for controlling operation of the detachable information unit 100. In an example embodiment, the housing 120 may include contacts 122 via which connection may be made to power systems of the riding lawn care vehicle 10 and/or via which connection may be made to a sensor network of the riding lawn care vehicle 10. In some embodiments, the housing 120 may include (and the contacts 122 may be included on) a mounting projection 130. The mounting projection 130 may be configured to slidably engage a docking station 140 disposed at the riding lawn care vehicle 10.

In an example embodiment, the docking station 140 may be shaped to receive the mounting projection 130. In some cases, the mounting projection 130 may include one or more detents disposed along a longitudinal length thereof to facilitate securing the mounting projection 130 via corresponding receiving holes disposed along a length of a cavity provided in the docking station 140 for reception of the mounting projection 130. Furthermore, in such an example, contacts may be provided in the cavity to correspond to the contacts 122 on the mounting projection 130 such that power transfer and/or network connections maybe made between the riding lawn care vehicle 10 and the detachable information unit 100.

In some example embodiments, the detachable information unit 100 may not include a mounting projection 130. In such embodiments, the housing 120 itself may fit within a receiving cavity on the riding lawn care vehicle 10 that is shaped to correspond to the shape of the housing 120. The contacts 122 may be positioned on a portion of the housing 120 (e.g., on the back or on side of the housing 120) that correspond to a location of contacts within the receiving cavity.

In some embodiments, the housing 120 may be rotatably connected to the riding lawn care vehicle 10. In this regard, for example, the housing 120 may be operably connected to the mounting projection 130 via a rotatable joint to enable the display screen 110 to be oriented in a direction that is preferred by the operator regardless of the fact that the mounting projection 130 may be fixed within the docking station 140. As an alternative, the display screen 110 may be configured to swivel or rotate within the housing 120. Other mechanisms for enabling the user to adjust a position of the display screen 110 while the detachable information unit 100 is mounted to the riding lawn care vehicle 10 may also be employed.

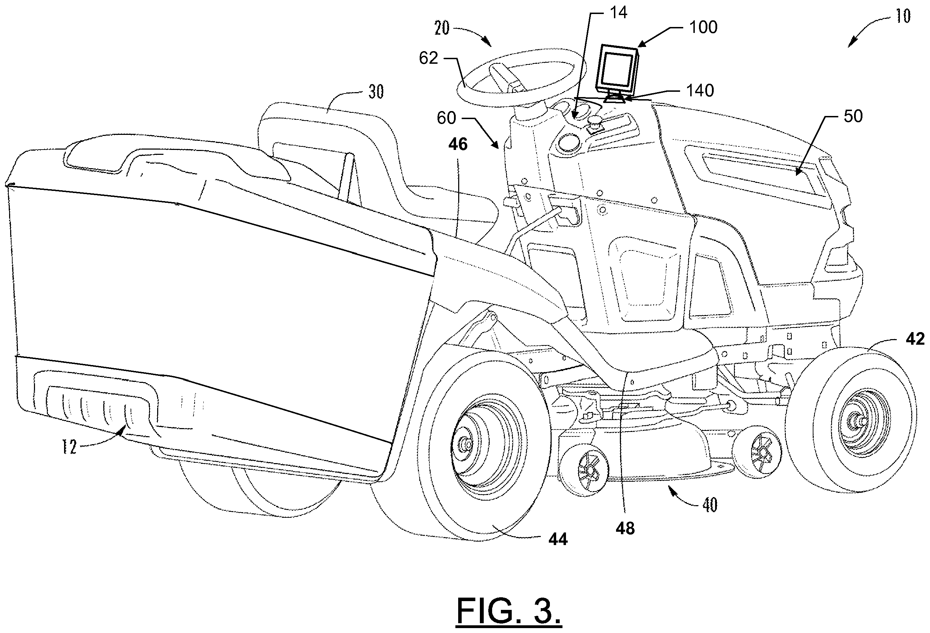

FIG. 3 illustrates an example embodiment of the riding lawn care vehicle 10 with the detachable information unit 100 installed in the docking station 140 in an example in which the docking station 140 is disposed on a portion of the steering assembly housing 60 that is forward of the steering wheel 62 (e.g., proximate to the information panel 14 when an information panel is employed). However, it should be appreciated that the docking station 140 could alternatively be positioned at any of a plurality of other locations on the riding lawn care vehicle 10. For example, in some embodiments, the docking station 140 may be disposed on the fender 46 or at a portion of the steering assembly housing 60 that is behind, along side, or below the steering wheel 62. Furthermore, in some embodiments, the docking station 140 may be positioned on the steering wheel 62 itself (e.g., at a center portion of the steering wheel 62 or otherwise positioned to fit within the circumference of the steering wheel 62). Moreover, in some embodiments, multiple docking stations may be provided such that the operator of the riding lawn care vehicle 10 may employ a selected one of the docking stations in which to install the detachable information unit 100. Thereafter, the operator may further customize the view by rotating or adjusting the orientation of the display screen 110 as described above. In embodiments in which multiple docking stations are employed, blank covers may be installed to cover and protect any docking station that does not have the detachable information unit 100 installed therein.

The detachable information unit 100, shown in greater detail in FIG. 2, may provide any of number of different gauges, displays or user interface consoles or elements on a single screen of the display screen 110 or on multiple screens that may be accessible by operator interaction. In some embodiments, the display screen 110 may be a liquid crystal display (LCD) or similar display screen. The display screen 110 may be a touch screen in some embodiments, and thus, operator instructions may be provided directly via the display screen 110. However, in other example embodiments, the display screen 110 may be accompanied by one or more function buttons 150 that may be selected by the operator to perform any of various functions such as powering the detachable information unit 100 on or off, navigating menus and/or selecting menu items, inputting data, providing instructions, and/or the like.

The detachable information unit 100 may be powered by an internal battery, or by power generated at the riding lawn care vehicle 10 (e.g., via a battery or alternator thereof). When powered by an internal battery, the contacts 122 may only be used to connect to a sensor network of the riding lawn care vehicle 10. The sensor network may include one or more sensors disposed at any of various locations throughout the riding lawn care vehicle 10 to monitor various parameters. For example, a seat sensor may be used to determine whether the operator is seated and engine sensors may determine engine parameters such as RPM or temperature. In some embodiments, one or more sensors may determine vehicle speed, blade speed, blade height, and/or the like. Sensors may also be used to determine engine run time, machine work time, and other operational parameters. In some embodiments, global positioning system (GPS) sensors may be included to monitor, display and/or record data regarding vehicle position. Data from the sensors may be fed to the detachable information unit 100 for storage, display, or for use in connection with applications that may be executed by processing circuitry of the detachable information unit 100.

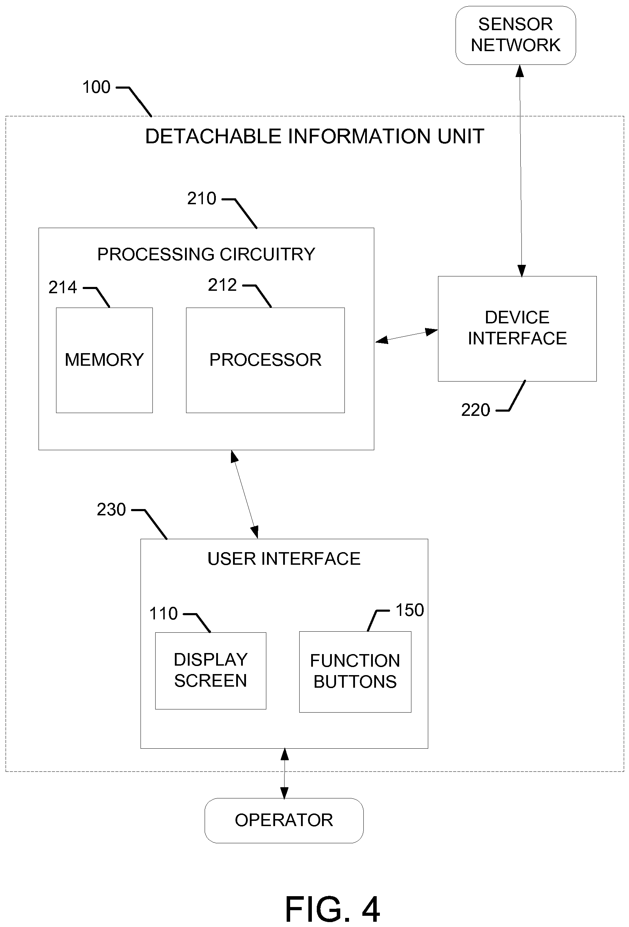

FIG. 4 illustrates a block diagram of various components of the detachable information unit 100 to illustrate some of the components that enable the functional performance of the detachable information unit 100 and to facilitate description of an example embodiment. In some example embodiments, the detachable information unit 100 may include or otherwise be in communication with processing circuitry 210 that is configurable to perform actions in accordance with example embodiments described herein. As such, for example, the functions attributable to the detachable information unit 100 may be carried out by the processing circuitry 210.

The processing circuitry 210 may be configured to perform data processing, control function execution and/or other processing and management services according to an example embodiment of the present invention. In some embodiments, the processing circuitry 210 may be embodied as a chip or chip set. In other words, the processing circuitry 210 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 210 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 210 may include a processor 212 and memory 214 that may be in communication with or otherwise control a device interface 220 and, in some cases, a user interface 230. As such, the processing circuitry 210 may be embodied as a circuit chip (e.g., an integrated circuit chip) configured (e.g., with hardware, software or a combination of hardware and software) to perform operations described herein. However, in some embodiments, the processing circuitry 210 may be embodied as a portion of an on-board computer.

The user interface 230 (if implemented) may be in communication with the processing circuitry 210 to receive an indication of a user input at the user interface 230 and/or to provide an audible, visual, mechanical or other output to the user. As such, the user interface 230 may include, for example, a display (e.g., the display screen 110), one or more buttons or keys (e.g., function buttons 150), and/or other input/output mechanisms (e.g., microphone, speakers, lights and/or the like).

The device interface 220 may include one or more interface mechanisms for enabling communication with other devices (e.g., sensors of the sensor network and/or other accessories or functional units). In some cases, the device interface 220 may be any means such as a device or circuitry embodied in either hardware, or a combination of hardware and software that is configured to receive and/or transmit data from/to sensors in communication with the processing circuitry 210.

In an exemplary embodiment, the memory 214 may include one or more non-transitory memory devices such as, for example, volatile and/or non-volatile memory that may be either fixed or removable. The memory 214 may be configured to store information, data, applications, instructions or the like for enabling the detachable information unit 100 to carry out various functions in accordance with exemplary embodiments of the present invention. For example, the memory 214 could be configured to buffer input data for processing by the processor 212. Additionally or alternatively, the memory 214 could be configured to store instructions for execution by the processor 212. As yet another alternative, the memory 114 may include one or more databases that may store a variety of data sets responsive to input from the sensor network. Among the contents of the memory 214, applications may be stored for execution by the processor 212 in order to carry out the functionality associated with each respective application. In some cases, the applications may include report generation applications that utilize parametric data to generate performance related reports for consumption locally (e.g., at the display screen 110) or remotely (e.g., responsive to transfer of the data to another device or computer).

The processor 212 may be embodied in a number of different ways. For example, the processor 212 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 212 may be configured to execute instructions stored in the memory 214 or otherwise accessible to the processor 212. As such, whether configured by hardware or by a combination of hardware and software, the processor 212 may represent an entity (e.g., physically embodied in circuitry - in the form of processing circuitry 210) capable of performing operations according to embodiments of the present invention while configured accordingly. Thus, for example, when the processor 212 is embodied as an ASIC, FPGA or the like, the processor 212 may be specifically configured hardware for conducting the operations described herein. Alternatively, as another example, when the processor 212 is embodied as an executor of software instructions, the instructions may specifically configure the processor 212 to perform the operations described herein.

In an example embodiment, the processor 212 (or the processing circuitry 210) may be embodied as, include or otherwise control the detachable information unit 100. As such, in some embodiments, the processor 212 (or the processing circuitry 210) may be said to cause each of the operations described in connection with the detachable information unit 100 by directing the detachable information unit 100 to undertake the corresponding functionalities responsive to execution of instructions or algorithms configuring the processor 212 (or processing circuitry 210) accordingly. As an example, the detachable information unit 100 may be configured to record position information, run time, work time, or other operational parameters regarding the tasks performed by riding lawn care vehicle 10 as described herein.

In an example embodiment, the processing circuitry 210 may be configured to generate gauge emulations to display data gathered by the sensor network. Alternatively or additionally, the processing circuitry 210 may be configured to generate charts or other displays to illustrate the data or information determinable based on the data. In some embodiments, the processing circuitry 210 may process, direct display of and/or store GPS position data (e.g., as a position history), speed information, run time, work time, engine parameters, and/or the like. Thus, for example, the processing circuitry 210 may direct storage of the data or other information generated based on the data in the memory 214. As such, the processing circuitry 210 may organize the data or information for reporting or for use in other applications that may be locally or remotely executed. For example, the processing circuitry 210 may store data for reporting to a computer executing fleet management software to manage a fleet of lawn mowers for implementation of efficient service, maintenance and operation management. In some cases, the detachable information unit 100 itself may be extracted from the docking station 140 of the riding lawn care vehicle 10 and inserted into a docking station of a remote network terminal or computer. The information stored on the memory 214 may then be extracted and thereby reported for fleet management or other applications.

In some cases, information may also be uploaded from the remote network terminal or computer to the detachable information unit 100. For example, upgrading software to improve the functionality of the detachable information unit 100 may be uploaded. In some embodiments, software upgrading gauge skins or emulation capabilities, adding new sensor interface capability, adding GPS support, and/or adding other improved functionality may be added via upload in order to upgrade the detachable information unit 100.

In some embodiments, the docking station 140 may be universally accepting of a plurality of different versions (e.g., models, or types) of detachable information units. For example, different software and/or hardware versions of detachable information units may be produced at any one time, or over time. The docking station 140 may have a standard size of receiving cavity and the detachable information units may be made to conform to standard dimensions so that all detachable information units may be sized to ensure that engagement and communication may be established between the docking station 140 and the detachable information units. As such, as software and/or hardware upgrades are made over time to the detachable information units, the same riding lawn care vehicle 10 may use upgraded detachable information units. Thus, for example, an operator may have limited functionality for a basic model detachable information unit that may be sold with a riding lawn care vehicle. However, the operator may increase access to functionality by uploading further software modules that upgrade the basic model, or upgraded models may be separately purchased and used with the riding lawn care vehicle. Moreover, in some cases, Bluetooth, WiFi or other wireless communication modules may be added to the detachable information unit 100 in order to allow wireless downloading of software, support information or other data, or allow wireless uploading of data to network devices for support, management or other purposes.

Compatibility may also be provided between detachable information units and upgraded or at least different riding lawn care vehicles as well. For example, different models of riding lawn care vehicles may have different sensor suites in their sensor networks (or sensors may be added by operators or designers as new models are developed). The processing circuitry 210 of the detachable information unit 100 may be configured to interrogate the sensor network of any riding lawn care vehicle to which the processing circuitry 210 is connected in order to determine available sensors of the riding lawn care vehicle. As such, for example, the same detachable information unit 100 (e.g., an operator specific unit) may be used on different machines. Moreover, in some cases, for example, profiles may be maintained by the processing circuitry 210 for different machines and/or for different operators.

Some example embodiments may therefore provide for a detachable information unit that may be used in connection with various different types of riding lawn care vehicles. However, some example embodiments may also be used in connection with other types of outdoor power equipment that may have docking stations disposed thereon. For example, walk behind yard maintenance devices, trimmers, edgers, tillers, chain saws and/or the like may be provided with docking stations that may work in connection with detachable information units that may be sized appropriately to avoid interference with other functions of the respective device on which they are employed. Any sensors that are resident on the corresponding devices may then communicate operational parameters to the detachable information unit for storage and/or display. The detachable information unit may then be removed and placed in communication with other devices to transfer the data thereto.

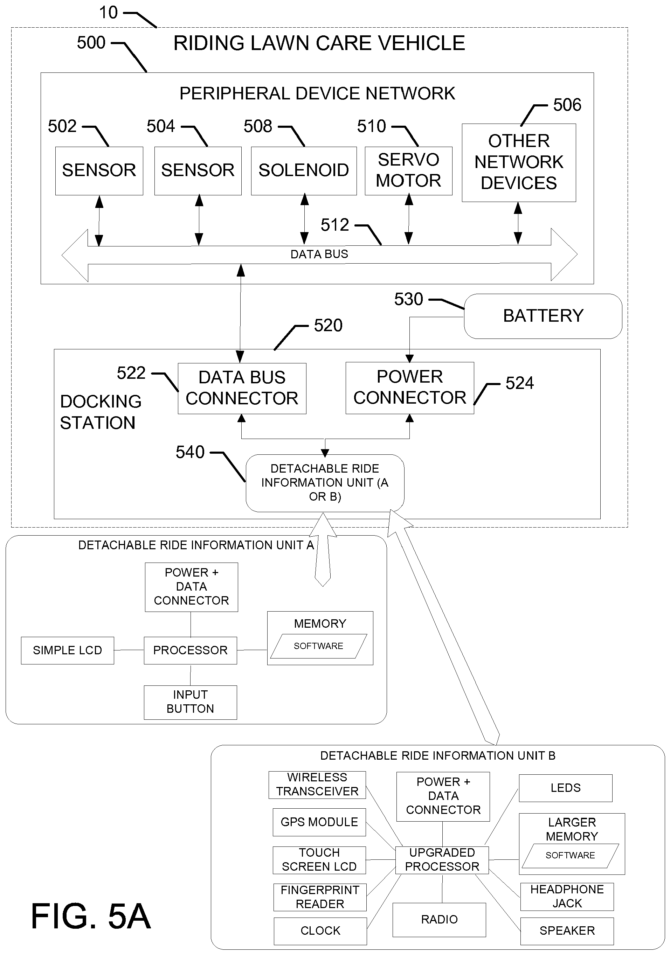

FIG. 5A illustrates a block diagram of components of the detachable information unit (or ride information unit) of a riding lawn care vehicle according to an example embodiment. In this regard, for example, FIG. 5A shows a peripheral device network 500 of the riding care vehicle 10. The peripheral device network 500 may include a sensor network (e.g., sensor 502, 504) along with other network devices 506, which may include, for example, a solenoid 508 and/or a servomotor 510. The peripheral device network 500 may be connected to a data bus 512, which may provide interconnectivity among the devices and/or connectivity to other external components. For example, the data bus 512 may provide connectivity with a docking station 520. The docking station 520 may include circuitry for a data bus connector 522 and a power connector 524, which may receive power from a battery 530 of the riding lawn care vehicle 10. The docking station 520 may also house a detachable ride information unit 540 (e.g., detachable information unit 100), which may be any of a plurality of different models of ride information unit (e.g., detachable ride information unit A or detachable ride information unit B). As shown in FIG. 5A, some detachable ride information units (e.g., detachable ride information unit A) may be relatively simple, including a basic processor, memory and LCD screen along with a simple input button. However, other detachable ride information units (e.g., detachable ride information unit B) may be more complex, including upgraded processors and memory along with a number of other peripheral devices (e.g., a touch screen, fingerprint reader, clock, GPS module, wireless transceiver, radio, LEDs, headphone jacks, speakers, etc.).

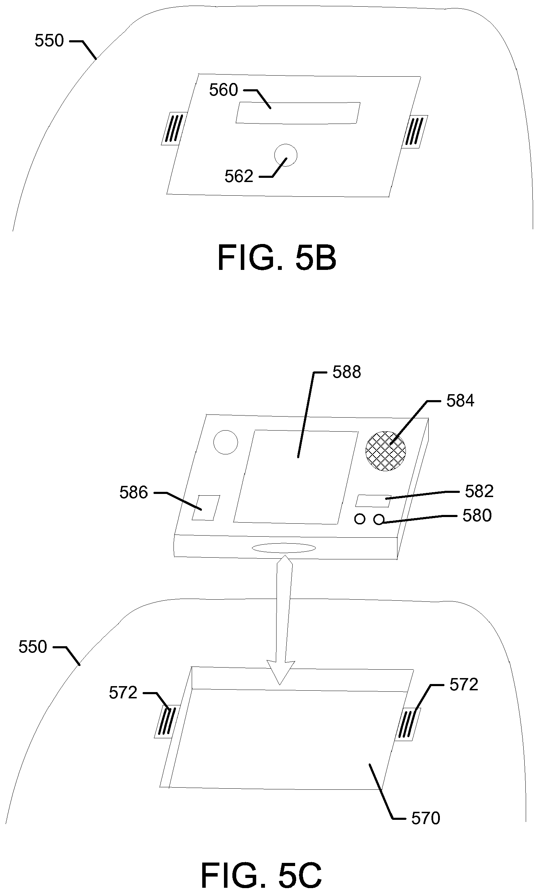

FIG. 5B illustrates a diagram of a dashboard 550 of a vehicle (e.g., a riding lawn care vehicle) including a relatively simple ride information unit of an example embodiment. In this regard, for example, ride information unit A of FIG. 5B includes only a simple display 560 and a toggle button 562 for use when installed into the docking station (as is shown in FIG. 5B. Meanwhile, FIG. 5C illustrates a diagram of the dashboard 550 of a vehicle (e.g., a riding lawn care vehicle) including a relatively complex ride information unit of an example embodiment. In this regard, ride information unit B of FIG. 5C fits into the docking station 570 (i.e., the same docking station that ride information unit A fits into from FIG. 5B) and may be releasably secured by spring loaded snaps 572. The ride information unit B of FIG. 5C may include jacks 580, a radio 582, a speaker 584, a fingerprint ID system 586 and/or other devices such as the touch screen display 588.

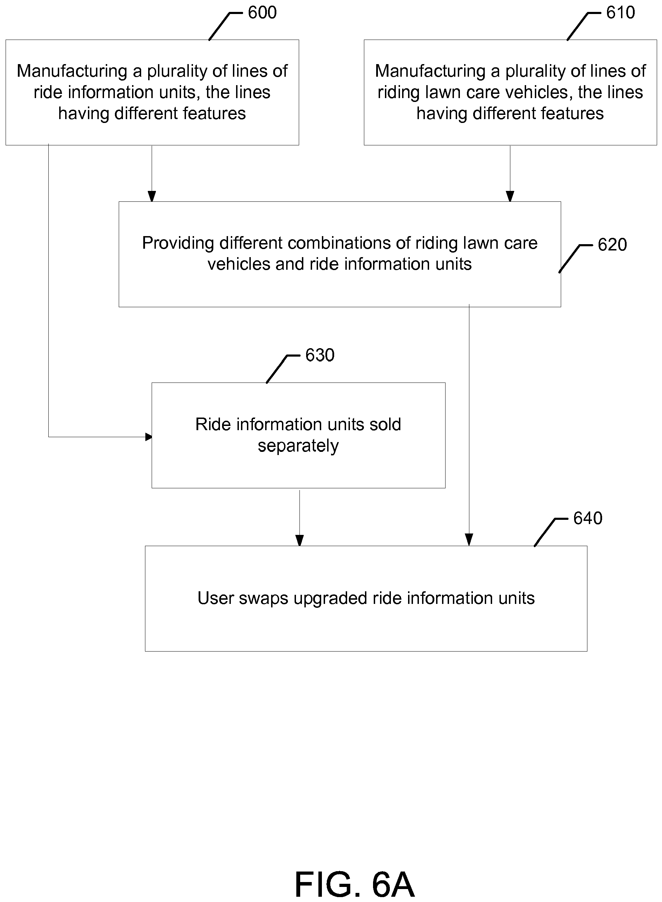

Example embodiments may be used in connection with outfitting various different models of riding lawn care vehicles (e.g., riding lawn mowers) with varying different models of ride information units in order to define a variety of versions or upgrade levels for each respective model of riding lawn care vehicle. FIG. 6A illustrates a block diagram of a method of manufacturing different models of riding lawn care vehicles according to an example embodiment. In this regard, for example, the method may include manufacturing a plurality of lines of ride information units (e.g., each unit having different features) at operation 600 and manufacturing a plurality of lines of riding lawn care vehicles (e.g., each having different features) at operation 610. At operation 620, various different combinations of riding lawn care vehicles and ride information units may be provided in order to allow customers to select between different grades of packages based on the vehicle desired and the corresponding level of performance desired for its corresponding ride information unit. However, ride information units may also be sold separately at operation 630 and users may swap out ride information units (e.g., to upgrade ride information units) as shown at operation 640.

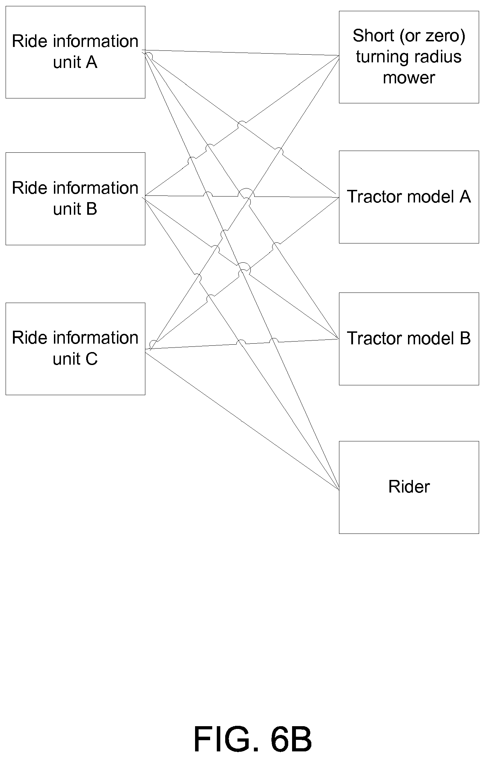

FIG. 6B illustrates a method of matching ride information units with mower models according to an example embodiment. Thus, FIG. 6B gives one example of how operation 620 of FIG. 6A might be accomplished. As shown in FIG. 6B, a plurality of levels (e.g., three in this example) of ride information units may be manufactured. Each level of ride information unit may then be provided in connection with each respective different lawn mower model to provide a corresponding plurality of options. If each available ride information option among n options is providable in connection with each corresponding available mower model option m, then the total number of possible combinations is m times n. In this example, 12 different options are possible (e.g., three ride information unit options times 4 mower model options). Having no ride information unit as an option would further increase the number of available options (to 16 in this example). In some embodiments, the combinations and/or specific ride information units may be brand specific or there may be certain price point specific units provided. Accordingly, consumers may be provided with a relatively large amount of choice and/or manufacturers may be provided with a large amount of flexibility relative to brand differentiation.

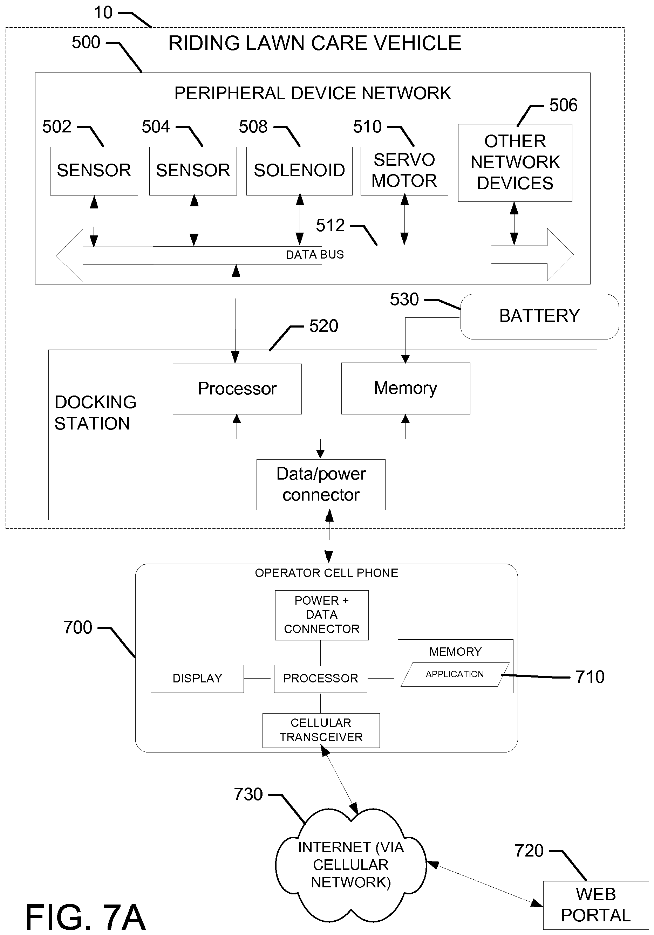

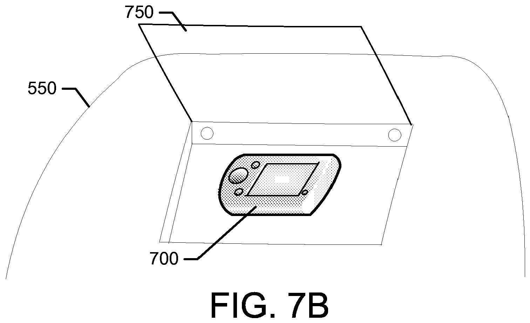

As indicated above, in some example embodiments the ride information unit may actually be embodied as a cell phone of the operator. FIG. 7A illustrates such an example. In this regard, FIG. 7A illustrates a block diagram of a cell phone being used in connection with an online communication network for employment of an example embodiment. For example, the cell phone 700 may be used to operate a lawn mower application 710 that may be downloaded from a web portal 720 via the Internet 730 (via the cellular network of the operator). In such an example, the dashboard 550 may include a door 750 (e.g., a clear plastic hinged door) to cover at least a portion of the docking station to allow the cell phone 700 to be stored in a protected environment during use as shown in FIG. 7B. As such, FIG. 7B illustrates an example holder for the cell phone of FIG. 7A. The cell phone 700 may communicate with the vehicle wirelessly (or via a wired connection) and may operate using its battery or may receive power from the vehicle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. Outdoor power equipment in the form of a riding lawn care vehicle or hand-held power equipment device, comprising:
an information unit (100,540,700) including:
a user interface (110,150,230,560,580-588),
a memory (214) for storing data received via a device network (500) of the outdoor power equipment, and
a processing circuitry (210,212) in communication with the user interface (110,150,230,560,580-588) and the memory (214), the processing circuitry (210,212) being configured to control operation of the information unit and generate information for operator viewing at the user interface (110,150,230,560,580-588), **characterised by**
a docking station (140, 520, 570) including a receiving cavity, disposed at a portion of the outdoor power equipment (10) and including an electrical contact (522,524) in communication with one or more devices (502-512) of the device network (500) wherein
the information unit (100,540,700) is a detachable information unit configured to detachably connect to the device network (500) via operable coupling with the docking station (140, 520, 570), and wherein
the detachable information unit (100,540,700) includes a mounting projection (130) insertable into the receiving cavity and connected to a housing of the detachable information unit (100,540,700) via a flexible joint to enable an orientation of the detachable information unit (100,540,700) to be adjusted while the mounting projection (130) is fixed within the receiving cavity, contacts (122) for connecting the processing circuitry to the device network (500) being disposed at the mounting projection (130) and/or
a display screen (110, 560, 588) of the user interface (110,150,230,560,580-588) is flexibly mounted relative to a housing (120) of the detachable information unit (100,540,700).

2. The outdoor power equipment of claim 1, wherein the processing circuitry (210,212) is configured to generate an output based on data received from the device network (500) and display the output responsive to operator input received at the user interface (110,150,230,560,580-588).

3. The outdoor power equipment of claim 1 or 2, wherein the detachable information unit (100,540,700) is shaped to fit the receiving cavity.

4. The outdoor power equipment of any one of claims 1-3, wherein the outdoor power equipment is a riding lawn care vehicle, further comprising multiple docking stations (140, 520, 570) at different respective locations on the riding lawn care vehicle, each docking station (140, 520, 570) being configured to engage the detachable information unit (100,540,700).

5. The outdoor power equipment of any one of claims 1-4, wherein the outdoor power equipment is a riding lawn care vehicle, further comprising a steering assembly housing (60), wherein the docking station (140, 520, 570) is disposed at a portion of the steering assembly housing (60).

6. The outdoor power equipment of any one of claims 1-4, wherein the outdoor power equipment is a riding lawn care vehicle, and wherein the docking station (140, 520, 570) is disposed proximate to a steering wheel (62) of the riding lawn care vehicle.

7. The outdoor power equipment of any one of claims 1-4, wherein the outdoor power equipment is a riding lawn care vehicle, and wherein the docking station (140, 520, 570) is disposed at a wheel fender (46) of the riding lawn care vehicle.

8. The outdoor power equipment of any one of claims 1-4, wherein the outdoor power equipment is a riding lawn care vehicle, and wherein the docking station (140, 520, 570) is disposed on a steering wheel (62) of the riding lawn care vehicle.

9. The outdoor power equipment of any of claims 1 to 8, wherein the outdoor power equipment is a riding lawn care vehicle, and wherein the processing circuitry (210,212) is configured to determine available sensors (502,504) of the riding lawn care vehicle and process data from the available sensors (502,504).

10. The outdoor power equipment of any of claims 1-9, wherein the outdoor power equipment is a riding lawn care vehicle, and wherein the riding lawn care vehicle is configured to communicate with a plurality of different versions of detachable information units (100,540,700).

11. The outdoor power equipment of any of claims 1 to 10, wherein the detachable information unit (700) comprises a mobile phone.

12. The outdoor power equipment of any one of claims 1-11, wherein the memory (214) is upgradeable with additional software to modify a version of the detachable information unit (100,540,700).

## Patentansprüche

1. Außenmotorgerät in Form eines Aufsitzrasenpflegefahrzeugs oder einer tragbaren Motorgerätevorrichtung, umfassend:
eine Informationseinheit (100, 540, 700), enthaltend:
eine Benutzerschnittstelle (110, 150, 230, 560, 580-588),
einen Arbeitsspeicher (214), zum Speichern von über ein Vorrichtungsnetzwerk (500) des Außenmotorgeräts erhaltenen Daten und
eine Verarbeitungsverschaltung (210, 212) in Kommunikation mit der Benutzerschnittstelle (110, 150, 230, 560, 580-588) und dem Arbeitsspeicher (214), wobei die Verarbeitungsverschaltung (210, 212) ausgelegt ist, einen Betrieb der Informationseinheit zu steuern und Informationen zur Ansicht durch den Betreiber auf der Benutzerschnittstelle (110, 150, 230, 560, 580-588) zu generieren, **dadurch gekennzeichnet, dass**
eine Andockstation (140, 520, 570) eine Aufnahmevertiefung aufweist, die an einem Abschnitt des Außenmotorgeräts (10) angeordnet ist und einen elektrischen Kontakt (522, 524) in Kommunikation mit einer oder mehreren Vorrichtungen (502-512) des Vorrichtungsnetzwerks (500) enthält, wobei die Informationseinheit (100, 540, 700) eine abnehmbare Informationseinheit ist, die ausgelegt ist, über eine betriebsfähige Kopplung zur Andockstation (140, 520, 570) abnehmbar an das Vorrichtungsnetzwerk (500) angebunden zu sein, und wobei
die abnehmbare Informationseinheit (100, 540, 700) einen Montagevorsprung (130) enthält, der in die Aufnahmevertiefung einsetzbar ist und über ein flexibles Gelenk mit einem Gehäuse der abnehmbaren Informationseinheit (100, 540, 700) verbunden ist, um zu ermöglichen, dass eine Ausrichtung der abnehmbaren Informationseinheit (100, 540, 700) justiert wird, während der Montagevorsprung (130) im Inneren der Aufnahmevertiefung fixiert ist, Kontakte (122) zum Verbinden der Verarbeitungsverschaltung mit dem Vorrichtungsnetzwerk (500) enthält, die am Montagevorsprung (130) angeordnet sind, und/oder
ein Anzeigebildschirm (110, 560, 588) der Benutzerschnittstelle (110, 150, 230, 560, 580-588) flexibel relativ zu einem Gehäuse (120) der abnehmbaren Informationseinheit (100, 540, 700) montiert ist.

2. Außenmotorgerät nach Anspruch 1, wobei die Verarbeitungsverschaltung (210, 212) ausgelegt ist, eine Ausgabe auf Grundlage von vom Vorrichtungsnetzwerk (500) erhaltenen Daten zu generieren und die Ausgabe als Reaktion auf eine an der Benutzerschnittstelle (110, 150, 230, 560, 580-588) empfangene Betreibereingabe anzuzeigen.

3. Außenmotorgerät nach Anspruch 1 oder 2, wobei die abnehmbare Informationseinheit (100, 540, 700) so geformt ist, dass sie der Aufnahmevertiefung entspricht.

4. Außenmotorgerät nach einem der Ansprüche 1-3, wobei das Außenmotorgerät ein Aufsitzrasenpflegefahrzeug ist, das ferner mehrere Andockstationen (140, 520, 570) an jeweils verschiedenen Positionen am Aufsitzrasenpflegefahrzeug umfasst, wobei jede Andockstation (140, 520, 570) ausgelegt ist, in die abnehmbare Informationseinheit (100, 540, 700) einzugreifen.

5. Außenmotorgerät nach einem der Ansprüche 1-4, wobei das Außenmotorgerät ein Aufsitzrasenpflegefahrzeug ist, das ferner ein Lenkerbaugruppengehäuse (60) umfasst, wobei die Andockstation (140, 520, 570) an einem Abschnitt des Lenkerbaugruppengehäuses (60) angeordnet ist.

6. Außenmotorgerät nach einem der Ansprüche 1-4, wobei das Außenmotorgerät ein Aufsitzrasenpflegefahrzeug ist und wobei die Andockstation (140, 520, 570) in der Nähe eines Lenkrads (62) des Aufsitzrasenpflegefahrzeugs angeordnet ist.

7. Außenmotorgerät nach einem der Ansprüche 1-4, wobei das Außenmotorgerät ein Aufsitzrasenpflegefahrzeug ist und wobei die Andockstation (140, 520, 570) an einer Radabdeckung (46) des Aufsitzrasenpflegefahrzeugs angeordnet ist.

8. Außenmotorgerät nach einem der Ansprüche 1-4, wobei das Außenmotorgerät ein Aufsitzrasenpflegefahrzeug ist und wobei die Andockstation (140, 520, 570) auf einem Lenkrad (62) des Aufsitzrasenpflegefahrzeugs angeordnet ist.

9. Außenmotorgerät nach einem der Ansprüche 1 bis 8, wobei das Außenmotorgerät ein Aufsitzrasenpflegefahrzeug ist und wobei die Verarbeitungsverschaltung (210, 212) ausgelegt ist, verfügbare Sensoren (502, 504) des Aufsitzrasenpflegefahrzeugs zu ermitteln und Daten von den verfügbaren Sensoren (502, 504) zu verarbeiten.

10. Außenmotorgerät nach einem der Ansprüche 1-9, wobei das Außenmotorgerät ein Aufsitzrasenpflegefahrzeug ist und wobei das Aufsitzrasenpflegefahrzeug ausgelegt ist, mit einer Vielzahl von verschiedenen Versionen von abnehmbaren Informationseinheiten (100, 540, 700) zu kommunizieren.

11. Außenmotorgerät nach einem der Ansprüche 1 bis 10, wobei die abnehmbare Informationseinheit (700) ein Mobiltelefon umfasst.

12. Außenmotorgerät nach einem der Ansprüche 1-11, wobei der Arbeitsspeicher (214) mit zusätzlicher Software nachrüstbar ist, um eine Version der abnehmbaren Informationseinheit (100, 540, 700) zu modifizieren.

## Revendications

1. Équipement électrique extérieur sous la forme d'un véhicule d'entretien du gazon à conducteur assis ou d'un dispositif d'équipement électrique portatif, comprenant:
une unité d'informations (100, 540, 700) comprenant:
une interface utilisateur (110, 150, 230, 560, 580-588),
une mémoire (214) pour stocker des données reçues par l'intermédiaire d'un réseau de dispositifs (500) de l'équipement électrique extérieur, et
une circuiterie de traitement (210, 212) en communication avec l'interface utilisateur (110, 150, 230, 560, 580-588) et la mémoire (214), la circuiterie de traitement (210, 212) étant configurée pour commander le fonctionnement de l'unité d'informations et générer des informations pour un opérateur regardant l'interface utilisateur (110, 150, 230, 560, 580-588), **caractérisé par** une station d'accueil (140, 520, 570) comprenant une cavité de réception,
disposée à une partie de l'équipement électrique extérieur (10) et comprenant un contact électrique (522, 524) en communication avec un ou plusieurs dispositifs (502-512) du réseau de dispositifs (500),
l'unité d'informations (100, 540, 700) étant une unité d'informations détachable configurée pour se connecter au réseau de dispositifs (500) de manière détachable par l'intermédiaire d'un couplage fonctionnel à la station d'accueil (140, 520, 570), et
l'unité d'informations détachable (100, 540, 700) comprenant une saillie de montage (130) apte à être introduite dans la cavité de réception et reliée à un logement de l'unité d'informations détachable (100, 540, 700) par l'intermédiaire d'un joint flexible pour permettre d'ajuster une orientation de l'unité d'informations détachable (100, 540, 700) tandis que la saillie de montage (130) est fixée à l'intérieur de la cavité de réception, des contacts (122) pour connecter la circuiterie de traitement au réseau de dispositifs (500) étant disposés au niveau de la saillie de montage (130), et/ou
un écran d'affichage (110, 560, 588) de l'interface utilisateur (110, 150, 230, 560, 580-588) étant monté de manière flexible par rapport à un logement (120) de l'unité d'informations détachable (100, 540, 700).

2. Équipement électrique extérieur selon la revendication 1, dans lequel la circuiterie de traitement (210, 212) est configurée pour générer une sortie sur la base de données reçues en provenance du réseau de dispositifs (500) et afficher la sortie en réponse à une entrée d'opérateur reçue au niveau de l'interface utilisateur (110, 150, 230, 560, 580-588).

3. Équipement électrique extérieur selon la revendication 1 ou 2, dans lequel l'unité d'informations détachable (100, 540, 700) est formée pour s'adapter à la cavité de réception.

4. Équipement électrique extérieur selon l'une quelconque des revendications 1 à 3, dans lequel l'équipement électrique extérieur est un véhicule d'entretien du gazon à conducteur assis, comprenant en outre de multiples stations d'accueil (140, 520, 570) à différents emplacements respectifs sur le véhicule d'entretien du gazon à conducteur assis, chaque station d'accueil (140, 520, 570) étant configurée pour engager l'unité d'informations détachable (100, 540, 700).

5. Équipement électrique extérieur selon l'une quelconque des revendications 1 à 4, dans lequel l'équipement électrique extérieur est un véhicule d'entretien du gazon à conducteur assis, comprenant en outre un logement d'ensemble de direction (60), la station d'accueil (140, 520, 570) étant disposée à une partie du logement d'ensemble de direction (60).

6. Équipement électrique extérieur selon l'une quelconque des revendications 1 à 4, dans lequel l'équipement électrique extérieur est un véhicule d'entretien du gazon à conducteur assis, et la station d'accueil (140, 520, 570) est disposée à proximité d'un volant de direction (62) du véhicule d'entretien du gazon à conducteur assis.

7. Équipement électrique extérieur selon l'une quelconque des revendications 1 à 4, dans lequel l'équipement électrique extérieur est un véhicule d'entretien du gazon à conducteur assis, et la station d'accueil (140, 520, 570) est disposée au niveau d'un garde-boue (46) du véhicule d'entretien du gazon à conducteur assis.

8. Équipement électrique extérieur selon l'une quelconque des revendications 1 à 4, dans lequel l'équipement électrique extérieur est un véhicule d'entretien du gazon à conducteur assis, et la station d'accueil (140, 520, 570) est disposée sur un volant de direction (62) du véhicule d'entretien du gazon à conducteur assis.

9. Équipement électrique extérieur selon l'une quelconque des revendications 1 à 8, dans lequel l'équipement électrique extérieur est un véhicule d'entretien du gazon à conducteur assis, et la circuiterie de traitement (210, 212) est configurée pour déterminer des capteurs disponibles (502, 504) du véhicule d'entretien du gazon à conducteur assis et traiter des données provenant des capteurs disponibles (502, 504).

10. Équipement électrique extérieur selon l'une quelconque des revendications 1 à 9, dans lequel l'équipement électrique extérieur est un véhicule d'entretien du gazon à conducteur assis, et le véhicule d'entretien du gazon à conducteur assis est configuré pour communiquer avec une pluralité de versions différentes d'unités d'informations détachables (100, 540, 700).

11. Équipement électrique extérieur selon l'une quelconque des revendications 1 à 10, dans lequel l'unité d'informations détachable (700) comprend un téléphone mobile.

12. Équipement électrique extérieur selon l'une quelconque des revendications 1 à 11, dans lequel la mémoire (214) est apte à être actualisée avec un logiciel supplémentaire pour modifier une version de l'unité d'informations détachable (100, 540, 700).
